(19) Europäisches Patentamt
European Patent Office
Office européen des brevets

(11) EP 3 112 803 A1

(12) DEMANDE DE BREVET EUROPEEN

(43) Date de publication:
04.01.2017 Bulletin 2017/01

(51) Int Cl.:
G01C 11/02 (2006.01)          G01C 11/06 (2006.01)
G06T 17/05 (2011.01)          H04N 5/232 (2006.01)
H04N 5/76 (2006.01)

(21) Numéro de dépôt: 16175817.2

(22) Date de dépôt: 22.06.2016

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
MA MD

(30) Priorité: 30.06.2015 FR 1556143

(71) Demandeur: Parrot Drones
75010 Paris (FR)

(72) Inventeur: SRON, Eng Hong
75019 PARIS (FR)

(74) Mandataire: Dupuis-Latour, Dominique et al
Bardehle Pagenberg
10, boulevard Haussmann
75009 Paris (FR)

(54) BLOC CAMERA APTE A ETRE EMBARQUE DANS UN DRONE POUR CARTOGRAPHIER UN TERRAIN ET PROCEDE DE GESTION DE CAPTURE D'IMAGES PAR UN BLOC CAMERA

(57) L'invention concerne un bloc caméra (14) apte à être embarqué dans un drone (10) pour cartographier un terrain (16), comprenant une caméra (18) apte à capter des images successives de portions du terrain survolé par le drone. Le bloc caméra comprend des moyens de mémorisation d'images captées, des moyens de comparaison d'information de la portion de terrain survolé visible via la caméra avec au moins une information d'au moins l'image précédente captée pour déterminer le taux de recouvrement de la portion du terrain survolé par rapport à au moins ladite image précédente captée, et des moyens d'envoi d'une commande à la caméra pour réaliser la capture d'une image, dès que le taux de recouvrement de la portion du terrain survolé est inférieur ou égal au taux de recouvrement prédéterminé.

Fig.1

**Description**

L'invention concerne les drones pour cartographier un terrain mais plus particulièrement un bloc caméra apte à être embarqué dans un drone.

L'AR.Drone 2.0, le Bebop Drone de Parrot SA, Paris, France ou l'eBee de SenseFly SA, Suisse, sont des exemples typiques de drones. Ils sont équipés d'une série de capteurs (accéléromètres, gyromètres 3 axes, altimètre) et d'au moins une caméra. Cette caméra est par exemple une caméra de visée verticale captant une image du terrain survolé. Ces drones sont pourvus d'un moteur ou de plusieurs rotors entraînés par des moteurs respectifs aptes à être commandés de manière différenciée afin de piloter le drone en attitude et en vitesse.

L'invention concerne plus précisément un bloc caméra apte à être embarqué dans un drone pour cartographier un terrain, notamment des champs de culture.

Ces blocs caméra sont par exemple équipés d'un capteur photo multi-spectral afin de mesurer la réflectance des cultures, c'est-à-dire la quantité de lumière réfléchie par les feuilles, afin d'obtenir des renseignements sur l'état de la photosynthèse.

Pour cartographier un terrain, ces drones parcourent le terrain et réalisent une succession de captures d'images.

Une fois la capture des images réalisée, ces images sont traitées pour réaliser une carte en 2D ou en 3D de la zone survolée, notamment afin d'avoir les caractéristiques des cultures observées.

Ces drones sont contrôlés pendant le survol du terrain à cartographier via un dispositif de commande ou par le chargement d'une trajectoire que le drone parcourt de manière autonome.

La cartographie d'un terrain est réalisée par le déclenchement successif de la caméra équipant le drone.

Pour la réalisation de ces captures successives, il est connu d'établir une communication particulière entre le drone et la caméra, le drone déterminant les temps successifs pour le déclenchement de la caméra et la réalisation les captures d'image.

Cette solution présente l'inconvénient d'être dépendant du protocole de communication entre les caméras et le drone imposé par le fabricant de drone. A ce jour, aucun standard de communication n'étant défini, les caméras sont alors développées de manière spécifique pour chaque fabriquant de drone.

Une autre solution connue est de réaliser durant le vol du drone, une capture d'image du terrain survolé à intervalle de temps régulier, notamment toutes les « X » secondes. Afin d'être apte à créer un carte complète du terrain survolé, une grande quantité d'images doit être captée.

Cette solution présente donc l'inconvénient de devoir mémoriser et traiter un volume significatif d'images. Aussi, plus d'images que nécessaires à cette cartographie sont générées, ce qui a pour inconvénient de nécessiter une grosse capacité de stockage et de lourds traitements pour construire la carte de la zone survolée.

Le but de la présente invention est de remédier à ces inconvénients, en proposant une solution permettant une cartographie complète du terrain à cartographier tout en minimisant le nombre d'acquisitions d'images à réaliser.

A cet effet, l'invention propose un bloc caméra apte à être embarqué dans un drone, pour cartographier un terrain, comprenant une caméra apte à capter des images successives de portions du terrain survolé par le drone. De façon caractéristique, il est prévu que le bloc caméra comprenne des moyens de mémorisation d'images captées, des moyens de comparaison d'information de la portion de terrain survolé visible via ladite caméra avec au moins une information d'au moins l'image précédente captée pour déterminer le taux de recouvrement de la portion du terrain survolé par rapport à au moins ladite image précédente captée, et des moyens d'envoi d'une commande à la caméra pour réaliser la capture d'une image, dès que le taux de recouvrement de la portion du terrain survolé est inférieur ou égal au taux de recouvrement prédéterminé.

Selon un mode de réalisation particulier, la caméra est une caméra à visée verticale pointant vers le bas.

Dans une forme de réalisation particulière, ladite information correspond à au moins une information de contexte de capture d'une portion de terrain.

En particulier, le bloc caméra peut comprendre des moyens de génération d'au moins une information de contexte de capture d'une portion de terrain survolé, et les moyens de mémorisation sont aptes à mémoriser l'information de contexte associée auxdites images captées, et les moyens de comparaison sont aptes à comparer au moins une information de contexte de la portion de terrain survolé générée par les moyens de génération d'une information de contexte avec au moins une information de contexte mémorisée d'au moins l'image précédente captée pour déterminer le taux de recouvrement de la portion du terrain survolé par rapport à au moins l'image précédente captée.

Selon un mode de réalisation, l'information de contexte comprend une information de géolocalisation et / ou la vitesse de déplacement du bloc caméra et / ou l'angle de vue de la caméra et / ou l'orientation de la caméra et / ou la distance entre la caméra et le sol.

Selon un mode de réalisation particulier, le bloc caméra comprend en outre un dispositif d'estimation de l'altitude dudit bloc caméra et des moyens de mémorisation de la distance initiale entre la caméra et le sol déterminée par ledit dispositif d'estimation de l'altitude avant le décollage du drone, et la distance entre la caméra et le sol de la portion de terrain survolée est déterminée par la différence entre la distance initiale et la distance déterminée par le dispositif d'estimation de l'altitude dudit bloc caméra lors du survol de la portion du terrain.

Selon un autre mode de réalisation particulier, le bloc caméra comprend en outre un dispositif d'analyse d'images de la caméra apte à produire un signal de vitesse horizontale, dérivé d'une analyse de la vitesse du déplacement de la portion de terrain captée d'une image à la suivante, et la distance entre la caméra et le sol est fonction en outre dudit signal de vitesse horizontale.

Selon un mode de réalisation particulier, le taux de recouvrement prédéterminé est d'au plus 85 % et de manière préférentielle d'au plus 50%.

L'invention propose également un drone pour cartographier un terrain comprenant un bloc caméra selon l'un des modes de réalisation décrit précédemment.

Selon un autre aspect, l'invention propose un procédé de gestion de capture d'images par un bloc caméra apte à être embarqué dans un drone pour cartographier un terrain, le bloc caméra comprenant une caméra apte à capter des images successives de portions du terrain survolé par le drone. De façon caractéristique, le procédé comprend les étapes suivantes : une étape de comparaison d'information de la portion de terrain survolé visible via la caméra avec au moins une information d'au moins l'image précédente captée pour déterminer le taux de recouvrement de la portion du terrain survolé par rapport à au moins ladite image précédente captée, et une étape d'envoi d'une commande à la caméra pour réaliser la capture d'une image, dès que le taux de recouvrement de la portion du terrain survolé est inférieur ou égal au taux de recouvrement prédéterminé.

Selon un mode de réalisation particulier, ladite information correspond à au moins une information de contexte de capture d'une portion de terrain.

Selon un autre mode de réalisation, le procédé comprend en outre une étape de génération d'au moins une information de contexte de la portion de terrain survolé, et l'étape de comparaison compare ladite au moins une information de contexte de la portion de terrain survolé avec au moins une information de contexte mémorisée d'au moins l'image précédente captée pour déterminer le taux de recouvrement de la portion du terrain survolé par rapport au moins à ladite image précédente captée.

Avantageusement, le procédé comprend en outre une étape de mémorisation de l'image captée et de son information de contexte générée lors de l'étape de génération d'au moins une information de contexte de la portion de terrain survolé.

Selon un mode de réalisation, l'information de contexte comprend une information de géolocalisation et / ou la vitesse de déplacement du bloc caméra et / ou l'angle de vue de la caméra et / ou l'orientation de la caméra et / ou la distance entre la caméra et le sol.

Selon le mode de réalisation, le procédé comprend en outre avant le décollage du drone, une étape de détermination de la distance initiale entre la caméra et le sol par estimation de l'altitude dudit bloc caméra, et durant le vol du drone, au moins une étape de détermination de la distance entre la caméra et le sol de la portion de terrain survolée par différence entre la distance initiale et la distance estimée de l'altitude dudit bloc caméra.

Selon un mode de réalisation alternatif, le procédé comprend en outre une étape d'analyse d'images de la caméra pour produire un signal de vitesse horizontale, dérivé d'une analyse du déplacement de la portion de terrain captée d'une image à la suivante, et une étape de détermination de la distance entre la caméra et le sol en fonction dudit signal de vitesse horizontale.

Afin un mode de réalisation particulier du procédé, le taux de recouvrement prédéterminé est d'au plus 85 % et de manière préférentielle d'au plus 50%.

On va maintenant décrire un exemple de mise en oeuvre de la présente invention, en référence aux dessins annexés.

La figure 1 illustre un drone et un terrain à cartographier.

La figure 2 illustre un exemple de trajectoire que le drone doit parcourir pour cartographier le terrain et une illustration d'une succession d'images capturées et l'image suivante à capter, selon l'invention.

La figure 3 illustre une structure du bloc caméra conformément à l'invention embarqué par exemple dans un drone.

La figure 4 représente le parcours d'un terrain présentant un fort dénivelé.

Les figures 5a et 5b représentent l'image captée N-1 et l'image captée N et la figure 5c illustre la superposition des images N-1 et N.

La figure 6 est un schéma illustrant différents paramètres permettant la détermination d'un contexte d'une image.

La figure 7 est un procédé de gestion de capture d'images par un bloc caméra conformément à l'invention.

Nous allons maintenant décrire un exemple de réalisation de l'invention.

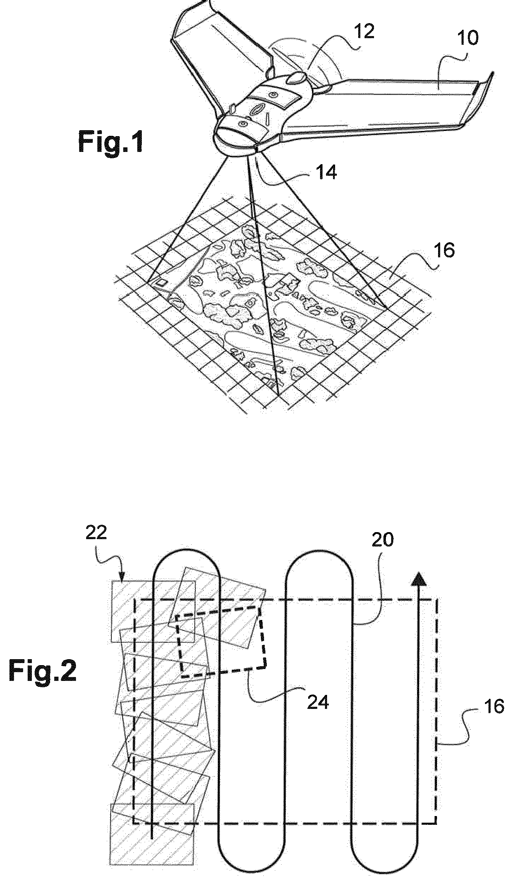

Sur la Figure 1, la référence 10 désigne de façon générale un drone. Selon l'exemple illustré en Figure 1, il s'agit d'une aile volante telle que le modèle *eBee* de SenseFly SA, Suisse. Ce drone comporte un moteur 12.

Selon un autre exemple de réalisation, le drone est un quadricoptère tel que le modèle *Bebop Drone* de Parrot SA, Paris, France. Ce drone comporte quatre rotors coplanaires dont les moteurs sont pilotés indépendamment par un système intégré de navigation et de contrôle d'attitude.

Le drone 10 est pourvu d'un bloc caméra embarqué 14 permettant d'obtenir un ensemble d'images du terrain à cartographier 16, terrain qui est survolé par le drone.

Conformément à l'invention, le bloc caméra 14 est autonome, en particulier, il est apte à fonctionner de manière indépendante du drone. En d'autres termes, le bloc caméra n'utilise aucune information provenant des capteurs intégrés au drone. De la sorte, aucun moyen de communication n'est à prévoir entre le drone et le bloc caméra, ce dernier est donc apte à être installé dans n'importe quel drone.

Pour ce faire, le drone 10 comprend une cavité destinée à recevoir le bloc caméra 14.

Conformément à l'invention, le bloc caméra 14 comprend une caméra 18, par exemple une caméra grand-angle haute définition, de résolution 12 Mpixel ou plus (20 ou 40 Mpixel), typiquement en technologie CMOS de résolution 1920 x 1080 pixels apte à capturer des images successives de portions du terrain 16 survolé par le drone. Ces images sont par exemple des images RVB (Rouge - Vert - Bleu) dans toutes les couleurs du spectre.

On appelle portion de terrain, une partie du terrain survolé visible par la caméra du bloc caméra 14 embarqué.

Selon un mode de réalisation particulier, le bloc caméra 14 est à visé verticale pointant vers le bas.

Ce bloc caméra 14 peut être utilisé en outre pour évaluer la vitesse du drone par rapport au sol.

Selon un exemple de réalisation, le drone apte à embarquer le bloc caméra 14 est muni de capteurs inertiels 44 (accéléromètres et gyromètres) permettant de mesurer avec une certaine précision les vitesses angulaires et les angles d'attitude du drone, c'est-à-dire les angles d'Euler (tangage $\varphi$, roulis $\theta$ et lacet $\psi$) décrivant l'inclinaison du drone par rapport à un plan horizontal d'un repère terrestre fixe UVW, étant entendu que les deux composantes longitudinale et transversale de la vitesse horizontale sont intimement liées à l'inclinaison suivant les deux axes respectifs de tangage et de roulis.

Selon un mode de réalisation particulier, le bloc caméra 14 est également muni d'au moins un capteur inertiel décrit ci-dessus.

Selon un mode de réalisation particulier, le drone 10 est piloté par un appareil de télécommande distant tel qu'un téléphone ou tablette multimédia à écran tactile et accéléromètres intégrés, par exemple un *smartphone* de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via l'appareil de télécommande.

Selon un autre mode de réalisation, l'utilisateur définit via un appareil de télécommande, un parcours à réaliser puis envoie les informations de parcours au drone afin que celui-ci réalise ce parcours.

L'appareil de télécommande communique avec le drone 10 via un échange bidirectionnel de données par liaison sans fil de type réseau local Wi-Fi (IEEE 802.11) ou Bluetooth (marques déposées).

Selon l'invention, afin d'être apte à créer une carte 2D ou 3D d'un terrain à cartographier, notamment d'un champ de culture agricole, qui soit exploitable et de très bonne qualité, les images successives captées par le bloc caméra embarqué dans le drone doivent avoir entre elles une zone significative de recouvrement. En d'autres termes, chaque point du terrain doit être capté par plusieurs images.

La figure 2 illustre un terrain à cartographier 16 qui est parcouru par un drone selon un parcours 20. Une succession d'images captées 22 par le bloc caméra 14 sont représentées, chaque image présentant un taux de recouvrement significatif avec l'image précédente. Ce taux de recouvrement doit être d'au moins 50 % et de préférence d'au moins 85%.

Le taux de recouvrement est par exemple le nombre de pixels en commun entre au moins deux images.

En pointillé sur la figure 2 est illustrée l'image suivante à capter 24 par le bloc caméra 14, cette image ayant un taux de recouvrement significatif avec l'image précédente dans le sens du déplacement du drone et avec une autre image captée.

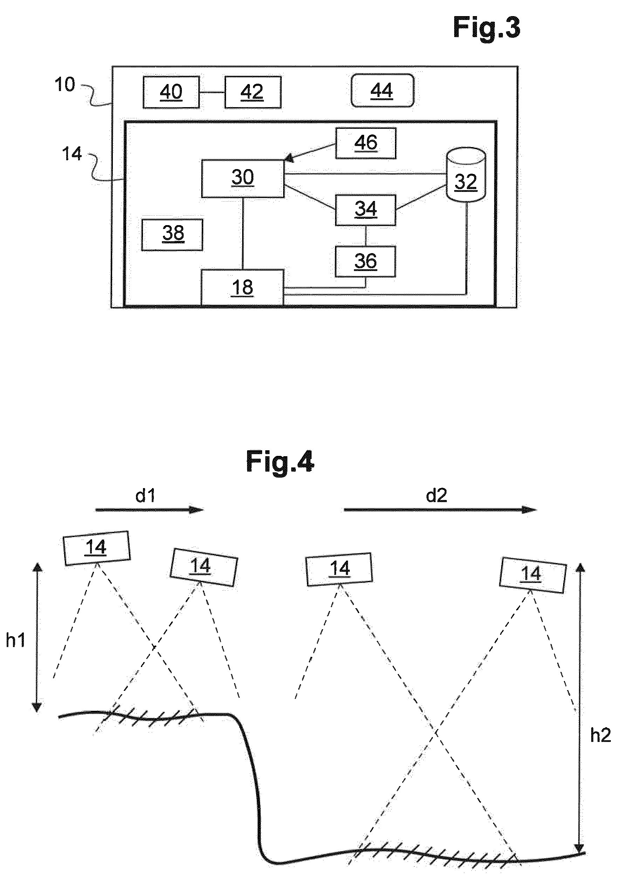

Pour ce faire, tel qu'illustré en figure 3, le drone 10 comprend un bloc caméra 14 conformément à l'invention.

En outre, le drone peut comprendre des moyens de réception d'une commande de vol 40 selon un parcours déterminé et des moyens de contrôle du vol 42 selon ledit parcours.

Le bloc caméra 14 conformément à l'invention comprend en outre des moyens de mémorisation 32 d'images captées, des moyens de comparaison 34 d'information de la portion de terrain survolé visible via la caméra 18 avec au moins une information d'au moins l'image précédente captée pour déterminer le taux de recouvrement de la portion du terrain survolé par rapport à au moins ladite image précédente captée, et des moyens d'envoi d'une commande 36 à la caméra 18 pour réaliser la capture d'une image, dès que le taux de recouvrement de la portion du terrain survolé est inférieur ou égal au taux de recouvrement prédéterminé.

Ainsi, conformément à l'invention, le bloc caméra 14 compare une information relative à la portion de terrain survolée, par exemple une vue de la portion de terrain obtenue par la caméra 18 du bloc caméra 14 avec au moins une information sur l'image précédente captée, par exemple, l'image précédente mémorisée.

Cette comparaison permet de déterminer la taille de la zone de recouvrement entre au moins l'image précédente captée et la portion de terrain survolée et visible par la caméra, définissant ainsi le taux de recouvrement.

L'information relative à une portion de terrain survolée est par exemple une image basse résolution ou une image haute résolution de la portion de terrain, ou toute autre information relative à la portion de terrain.

En particulier, l'information peut correspondre à au moins une information de contexte de capture d'une portion de terrain.

Selon un mode de réalisation particulier, le bloc caméra 14 comprend en outre, tel qu'illustré en figure 3, des moyens de génération d'au moins une information de contexte 30 de capture d'une portion de terrain.

Plus précisément, selon un mode de réalisation, les moyens de mémorisation 32 sont aptes à mémoriser l'information de contexte associée auxdites images captées, et les moyens de comparaison 34 sont aptes à comparer au moins une information de contexte de la portion de terrain survolé générée par les moyens de génération d'une information de contexte 30 avec au moins une information de contexte mémorisée d'au moins l'image précédente captée pour déterminer le taux de recouvrement de la portion du terrain survolé par rapport à au moins l'image précédente captée

Conformément à l'invention, pour permettre une construction de la carte du terrain de bonne qualité tout en minimisant le nombre de capture d'images, le taux de recouvrement prédéterminé est d'au moins 85 % et de manière préférentielle d'au moins 55%.

Un tel taux de recouvrement entre aux moins deux images successives permet d'avoir plusieurs images ayant captées un même point du terrain à cartographier.

Chaque image captée est mémorisée dans les moyens de mémorisation 32 avec au moins une information de contexte de capture.

Les moyens de génération 30 d'une information de contexte du bloc caméra sont aptes à générer une information de contexte telle que par exemple :

- une information de géolocalisation obtenue par un système de géolocalisation ou dispositif GPS intégré au bloc caméra 14 et / ou
- la vitesse de déplacement du bloc caméra 14 et / ou
- l'angle de vue de la caméra et / ou
- l'orientation de la caméra et / ou
- la distance h entre la caméra et le sol.

Ces moyens de génération 30 d'une information de contexte génèrent une information de contexte à partir par exemple d'information émise par un ou plusieurs capteurs 46 intégrés au bloc caméra 14, comme illustré en figure 3.

Selon un autre mode de réalisation, ces moyens de génération 30 d'une information de contexte génèrent une information de contexte à partir d'informations déterminées via les images capturées.

L'information de contexte utilisée et mémorisée lors de la réalisation d'une cartographie peut être dépendante de la configuration du terrain à cartographier.

Dans le cas, par exemple, d'un terrain à cartographier relativement plat, c'est-à-dire, présentant un faible niveau de dénivelé, une information de géolocalisation peut être utilisée comme unique information de contexte.

Selon cet exemple, les moyens de comparaison 34 du bloc caméra 14 comparent l'information de géolocalisation d'au moins l'image précédente captée et mémorisée avec l'information de géolocalisation générée par le système de géolocalisation intégré au bloc caméra 14. De cette comparaison, les moyens 34 définissent un taux de recouvrement entre l'image précédente captée et la portion de terrain vue par la caméra. Si le taux de recouvrement de la portion du terrain survolé déterminé par les moyens de comparaison est inférieur ou égal au taux de recouvrement prédéterminé, alors les moyens d'envoi d'une commande 36 enverront une commande à la caméra pour la capture de l'image.

Cette image captée sera mémorisée par les moyens de mémorisation 32 avec son information de contexte générée par les moyens 30.

L'information de contexte dans une telle configuration de terrain peut également correspondre à la distance h entre la caméra et le sol.

Selon un autre exemple, lorsque le terrain présente des dénivelés, notamment des dénivelés importants, les informations de contexte des images doivent comprendre une pluralité de données de manière à pouvoir déterminer un taux de recouvrement réel entre au moins l'image précédente captée et mémorisée et la nouvelle portion de terrain survolée.

La figure 4 illustre un terrain 16 présentant un fort dénivelé. Comme vu précédemment, dans une telle situation, une pluralité d'informations de contexte doivent être mémorisées lors de la capture d'une image notamment afin de pouvoir déterminer l'image suivante à capter dès que le taux de recouvrement réel est inférieur ou égal au taux de recouvrement prédéterminé.

Dans un tel contexte, les informations de contexte doivent comprendre notamment la vitesse de déplacement du bloc caméra 14, l'angle de vue de la caméra 14, l'orientation de la caméra 14 et la distance h entre la caméra et le sol.

L'orientation de la caméra 14 est par exemple déterminée à partir des informations émises par au moins l'un des capteurs 46 suivants : gyromètre, accéléromètre ou magnétomètre embarqués dans le bloc caméra 14.

La distance $h$ entre la caméra et le sol peut être déterminée selon différents procédés de mise en oeuvre, le procédé utilisé pouvant être déterminé notamment en fonction de la configuration du terrain à cartographier.

Lorsque le terrain à cartographier est relativement plat, c'est-à-dire que le dénivelé du terrain est négligeable alors le procédé de calcul de la distance h entre la caméra et le sol comprend une étape préalable de détermination de cette distance h, appelée distance initiale, réalisée avant le décollage du drone.

Cette distance initiale h entre la caméra et le sol est mémorisée via des moyens de mémorisation dans le bloc caméra 14, cette distance h est déterminée par un dispositif 38 d'estimation de l'altitude du bloc caméra 14 embarqué dans le bloc caméra tel qu'illustré en figure 3.

Ce dispositif 38 comprend par exemple un système estimateur d'altitude à partir des mesures d'un capteur barométrique et d'un capteur à ultrasons tel que décrit notamment dans le document EP 2 644 240 au nom de Parrot SA.

Puis, ce procédé comprend une étape de détermination de la distance entre la caméra et le sol de la portion de terrain survolé en réalisant la différence entre la distance initiale mémorisée et la distance déterminée entre la caméra et le sol de la portion du terrain survolé, aussi appelée distance caméra - sol courante, par le dispositif 38 d'estimation de l'altitude du bloc caméra 14.

Toutefois, lorsque le relief du terrain à cartographier est important, un second procédé de détermination de la distance entre la caméra et le sol est préféré.

Ce second procédé comprend une étape d'analyse d'images de la caméra pour produire un signal de vitesse horizontale, dérivé d'une analyse de la vitesse du déplacement de la portion de terrain captée d'une image à la suivante, cette vitesse de déplacement étant déterminée par exemple en pixel.

Pour ce faire, le bloc caméra 14 comprend en outre un dispositif d'analyse d'images de la caméra apte à produire un signal de vitesse horizontale, dérivé d'une analyse du déplacement de la portion de terrain captée d'une image à la suivante.

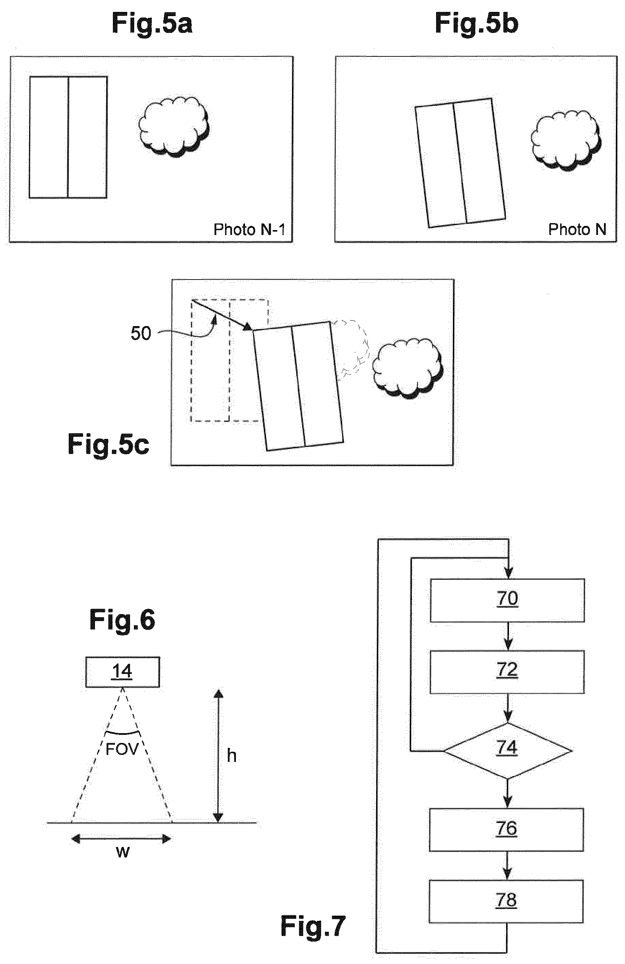

Les figures 5a et 5b illustrent deux images successives N-1 et N et la figure 5c illustrent la superposition des images N-1 et N.

A partir de ces deux images, il est possible de déterminer la vitesse de déplacement du bloc caméra en pixel Vpix représentée par la flèche 50 sur la figure 5c.

La figure 6 illustre les différents paramètres utilisés pour la détermination de la distance entre la caméra et le sol.

La distance *h* entre la caméra et le sol est alors déterminée de la manière suivante :

$$\frac{w}{2h} = \tan\left(\frac{FOV}{2}\right)$$

w étant la largeur de la portion du terrain visible par la caméra verticale
FOV étant l'angle de vue

$$Résolution = \frac{w}{w_{pix}}$$

avec Wpix étant le nombre de pixel de la caméra à visée verticale

Ou

$$Résolution = \frac{v}{v_{pix}}$$

Ainsi, on en déduit que la distance h entre la caméra et le sol est déterminée selon l'équation :

$$h = \frac{v.w_{pix}}{2.v_{pix}.\tan\left(\frac{FOV}{2}\right)}$$

Le procédé de gestion de capture d'images par un bloc caméra apte à être embarqué dans un drone 10 pour cartographier un terrain 16 selon l'invention est maintenant illustré en figure 7, le bloc caméra 14 comprenant une caméra 18 apte à capter des images successives de portions du terrain survolé par le drone.

Ce procédé de gestion de capture d'images par un bloc caméra 14 pour cartographier un terrain 16 comprend notamment les étapes suivantes :

- une étape de comparaison 72 d'information de la portion de terrain survolé visible via la caméra 18 avec au moins une information d'au moins l'image précédente captée pour déterminer le taux de recouvrement de la portion du terrain survolé par rapport à au moins ladite image précédente captée et
- une étape d'envoi d'une commande 76 à la caméra pour réaliser la capture d'une image, dès que le taux de recouvrement de la portion du terrain survolé est inférieur ou égal au taux de recouvrement prédéterminé.

Ainsi, conformément à l'invention, le procédé réalise une comparaison d'une information relative à la portion du terrain survolée, par exemple une vue de la portion de terrain avec au moins une information sur l'image précédente captée, par exemple, l'image précédente mémorisée.

Comme vu précédemment, l'information relative à une portion de terrain survolée est par exemple une image basse résolution ou une image haute résolution de la portion de terrain, ou toute autre information relative à la portion de terrain.

En particulier, l'information peut correspondre à au moins une information de contexte de capture d'une portion de terrain.

Selon un mode de réalisation particulier dudit procédé, celui-ci comprend une étape de génération 70 d'au moins une information de contexte de la portion de terrain survolé. Cette étape permet d'identifier le contexte du bloc caméra 14 lors du survol du terrain, par exemple la géolocalisation du bloc caméra et / ou la vitesse de déplacement du bloc caméra et / ou l'angle de vue de la caméra et / ou l'orientation de la caméra et / ou la distance entre la caméra et le sol.

L'étape 70 est suivie d'une étape de comparaison 72 de ladite au moins une information de contexte de la portion de terrain survolé avec au moins une information de contexte mémorisée, notamment par les moyens de mémorisation 32 d'au moins l'image précédente captée pour déterminer le taux de recouvrement de la portion du terrain survolé par rapport au moins à ladite image précédente captée.

Cette étape permet de comparer indirectement l'image de la portion de terrain qui est en train d'être survolée par le drone 10 avec l'image captée précédemment, voire avec également d'autres images captées. Puis cette étape détermine le taux de recouvrement de la portion de terrain en train d'être survolée avec à minima l'image précédente captée.

Après avoir déterminé le taux de recouvrement, le procédé se poursuit à l'étape de comparaison 74 du taux de recouvrement de la portion du terrain survolé avec un taux de recouvrement prédéterminé.

En effet, afin de déterminer à partir d'une ou plusieurs images captées et mémorisées, l'image suivante à capter, il doit être déterminé si le nouveau positionnement du bloc caméra suite à son déplacement permet de découvrir une nouvelle portion du terrain à cartographier tout en ayant un taux de recouvrement prédéterminé avec une ou plusieurs images déjà captées et mémorisées.

Si lors de l'étape 74, le taux de recouvrement de la portion du terrain survolé est supérieur au taux de recouvrement prédéterminé, alors le procédé se poursuit à l'étape 70 par la génération d'au moins une nouvelle information de contexte de la nouvelle portion de terrain survolé.

Dans le cas contraire, c'est-à-dire le taux de recouvrement de la portion du terrain survolé est inférieur ou égal au taux de recouvrement prédéterminé, alors l'étape 74 se poursuit à l'étape 76 d'envoi d'une commande à la caméra pour réaliser la capture d'une image.

L'étape 76 est suivie d'une étape 78 de mémorisation de l'image captée et de son information de contexte générée lors de l'étape 70 d'au moins une information de contexte de la portion de terrain survolé.

L'étape 78 est suivi ensuite de l'étape 70 précédemment décrite afin de procéder à la détermination de l'image suivante à capter.

Ces différentes étapes sont exécutées jusqu'à la réalisation des captures d'image de l'ensemble du terrain à cartographier.

## Revendications

1. Bloc caméra (14) apte à être embarqué dans un drone (10), pour cartographier un terrain (16), comprenant une caméra (18) apte à capter des images successives de portions du terrain survolé par le drone, **caractérisé en ce qu'**il comprend

   - des moyens de mémorisation (32) d'images captées,
   - des moyens de comparaison (34) d'information de la portion de terrain survolé visible via ladite caméra avec au moins une information d'au moins l'image précédente captée pour déterminer le taux de recouvrement de la portion du terrain survolé par rapport à au moins ladite image précédente captée, et

   - des moyens d'envoi d'une commande (36) à la caméra pour réaliser la capture d'une image, dès que le taux de recouvrement de la portion du terrain survolé est inférieur ou égal au taux de recouvrement prédéterminé.

2. Bloc caméra selon la revendication précédente, **caractérisé en ce que** ladite information correspond à au moins une information de contexte de capture d'une portion de terrain.

3. Bloc caméra selon la revendication précédente, **caractérisé en ce qu'**il comprend des moyens de génération (30) d'au moins une information de contexte de capture d'une portion de terrain survolé, et **en ce que** :

   - les moyens de mémorisation (32) sont aptes à mémoriser l'information de contexte associée auxdites images captées, et
   - les moyens de comparaison (34) sont aptes à comparer au moins une information de contexte de la portion de terrain survolé générée par les moyens de génération d'une information de contexte avec au moins une information de contexte mémorisée d'au moins l'image précédente captée pour déterminer le taux de recouvrement de la portion du terrain survolé par rapport à au moins l'image précédente captée.

4. Bloc caméra selon l'une des revendications 2 et 3, **caractérisé en ce que** l'information de contexte comprend une information de géolocalisation et / ou la vitesse de déplacement du bloc caméra et / ou l'angle de vue de la caméra et / ou l'orientation de la caméra et / ou la distance entre la caméra et le sol.

5. Bloc caméra selon la revendication précédente, **caractérisé en ce qu'**il comprend en outre

   - un dispositif d'estimation de l'altitude dudit bloc caméra (38) et
   - des moyens de mémorisation de la distance initiale entre la caméra et le sol déterminée par ledit dispositif d'estimation de l'altitude avant le décollage du drone,

   et **en ce que** la distance entre la caméra et le sol de la portion de terrain survolée est déterminée par la différence entre la distance initiale et la distance déterminée par le dispositif d'estimation de l'altitude dudit bloc caméra lors du survol de la portion du terrain.

6. Bloc caméra selon la revendication précédente, **caractérisé en ce qu'**il comprend en outre un dispositif d'analyse d'images de la caméra apte à produire un signal de vitesse horizontale, dérivé d'une analyse de la vitesse du déplacement de la portion de terrain captée d'une image à la suivante, et **en ce que** la distance entre la caméra et le sol est fonction en outre dudit signal de vitesse horizontale.

**7.** Bloc caméra selon l'une des revendications précédentes, **caractérisé en ce que** le taux de recouvrement prédéterminé est d'au plus 85 % et de manière préférentielle d'au plus 50%.

**8.** Drone (10) pour cartographier un terrain (16) comprenant un bloc caméra selon l'une quelconque des revendications 1 à 7.

**9.** Procédé de gestion de capture d'images par un bloc caméra apte à être embarqué dans un drone (10) pour cartographier un terrain (16), le bloc caméra comprenant une caméra (18) apte à capter des images successives de portions du terrain survolé par le drone, **caractérisé en ce que** le procédé comprend les étapes suivantes :

- une étape de comparaison (72) d'information de la portion de terrain survolé visible via la caméra avec au moins une information d'au moins l'image précédente captée pour déterminer le taux de recouvrement de la portion du terrain survolé par rapport à au moins ladite image précédente captée, et
- une étape d'envoi d'une commande (76) à la caméra pour réaliser la capture d'une image, dès que le taux de recouvrement de la portion du terrain survolé est inférieur ou égal au taux de recouvrement prédéterminé.

**10.** Procédé selon la revendication précédente, **caractérisé en ce que** ladite information correspond à au moins une information de contexte de capture d'une portion de terrain.

**11.** Procédé selon la revendication précédente, **caractérisé en ce que** le procédé comprend en outre une étape de génération (70) d'au moins une information de contexte de la portion de terrain survolé, et **en ce que**

- l'étape de comparaison (72) compare ladite au moins une information de contexte de la portion de terrain survolé avec au moins une information de contexte mémorisée d'au moins l'image précédente captée pour déterminer le taux de recouvrement de la portion du terrain survolé par rapport au moins à ladite image précédente captée.

**12.** Procédé selon la revendication 10 ou la revendication 11, **caractérisé en ce que** le procédé comprend en outre une étape de mémorisation (78) de l'image captée et de son information de contexte générée lors de l'étape de génération (70) d'au moins une information de contexte de la portion de terrain survolé.

**13.** Procédé selon l'une des revendications 10 à 12, **caractérisé en ce que** l'information de contexte comprend une information de géolocalisation et / ou la vitesse de déplacement du bloc caméra et / ou l'angle de vue de la caméra et / ou l'orientation de la caméra et / ou la distance entre la caméra et le sol.

**14.** Procédé selon la revendication précédente, **caractérisé en ce qu'**il comprend en outre avant le décollage du drone, une étape de détermination de la distance initiale entre la caméra et le sol par estimation de l'altitude dudit bloc caméra, et
durant le vol du drone, au moins une étape de détermination de la distance entre la caméra et le sol de la portion de terrain survolée par différence entre la distance initiale et la distance estimée de l'altitude dudit bloc caméra.

**15.** Procédé selon la revendication 13, **caractérisé en ce qu'**il comprend en outre une étape d'analyse d'images de la caméra pour produire un signal de vitesse horizontale, dérivé d'une analyse du déplacement de la portion de terrain captée d'une image à la suivante, et une étape de détermination de la distance entre la caméra et le sol en fonction dudit signal de vitesse horizontale.

**16.** Procédé selon l'une des revendications 9 à 15, **caractérisé en ce que** le taux de recouvrement prédéterminé est d'au plus 85 % et de manière préférentielle d'au plus 50%.

**Fig.1**

**Fig.2**

EP 3 112 803 A1

**Fig.3**

10

40 — 42          44

14

46
30          32
34
38
36
18

**Fig.4**

d1 →          d2 →

14      14        14        14

h1

h2

10

## Fig.5a

Photo N-1

## Fig.5b

Photo N

50

## Fig.5c

## Fig.6

14

FOV

h

w

70

72

74

76

78

## Fig.7

Europäisches
Patentamt

European
Patent Office

Office européen
des brevets

**RAPPORT DE RECHERCHE EUROPEENNE**

Numéro de la demande

EP 16 17 5817

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | US 2013/135440 A1 (OHTOMO ET AL)<br>30 mai 2013 (2013-05-30)<br>* alinéa [0001] *<br>* alinéa [0009] *<br>* alinéa [0015] *<br>* alinéas [0044] - [0046] *<br>* alinéas [0048] - [0053] *<br>* alinéa [0060] *<br>* alinéas [0070] - [0072] *<br>* figures 1-3 *<br>----- | 1-4,<br>7-13,16<br>5,6,14,<br>15 | INV.<br>G01C11/02<br>G01C11/06<br>G06T17/05<br>H04N5/232<br>H04N5/76 |
| X<br>Y | EP 2 527 787 A2 (TOPCON CORP)<br>28 novembre 2012 (2012-11-28)<br>* alinéa [0001] *<br>* alinéas [0006] - [0009] *<br>* alinéa [0011] *<br>* alinéa [0019] *<br>* alinéa [0022] *<br>* alinéas [0025] - [0029] *<br>* alinéas [0032] - [0037] *<br>* alinéa [0041] *<br>* alinéa [0046] *<br>* alinéa [0060] *<br>* figures 1,2,4 *<br>----- | 1-4,8-13<br>5,6,14,<br>15 | |
| X<br><br>A | US 9 046 759 B1 (TARLINTON ET AL)<br>2 juin 2015 (2015-06-02)<br><br>* colonne 1, lignes 33-54 *<br>* colonne 2, lignes 13-33 *<br>* colonne 2, ligne 53 - colonne 3, ligne 2 *<br>* colonne 7, lignes 31-37 *<br>* colonne 9, lignes 11-37 *<br>* colonne 9, lignes 52-56 *<br>* figures 1, 6, 8, 12, 13, 15, 19 *<br>----- | 1,2,4,7,<br>9,10,13,<br>16<br>3,5,6,<br>12,14,15 | **DOMAINES TECHNIQUES RECHERCHES (IPC)**<br><br>G01C<br>G06T<br>H04N |

-/--

Le présent rapport a été établi pour toutes les revendications

| Lieu de la recherche | Date d'achèvement de la recherche | Examinateur |
|---|---|---|
| Munich | 25 juillet 2016 | Fragua, Miguel Angel |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

**Numéro de la demande**

EP 16 17 5817

## DOCUMENTS CONSIDERES COMME PERTINENTS

| Catégorie | Citation du document avec indication, en cas de besoin, des parties pertinentes | Revendication concernée |
|---|---|---|
| A | US 2014/267590 A1 (MCCLATCHIE ET AL) 18 septembre 2014 (2014-09-18) <br> * alinéa [0021] * <br> * alinéas [0027] - [0029] * <br> * alinéas [0050] - [0051] * <br> * alinéas [0053] - [0054] * <br> * alinéa [0064] * <br> * alinéas [0076] - [0079] * <br> * alinéas [0127] - [0130] * <br> * figures 5, 6 * <br> ----- | 1-16 |

**CLASSEMENT DE LA DEMANDE (IPC)**

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 25 juillet 2016 | Fragua, Miguel Angel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

# EP 3 112 803 A1

## ANNEXE AU RAPPORT DE RECHERCHE EUROPEENNE
## RELATIF A LA DEMANDE DE BREVET EUROPEEN NO.

EP 16 17 5817

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2016

| Document brevet cité au rapport de recherche | | Date de publication | Membre(s) de la famille de brevet(s) | | Date de publication |
|---|---|---|---|---|---|
| US 2013135440 | A1 | 30-05-2013 | CN 103134475 A | | 05-06-2013 |
| | | | EP 2597422 A2 | | 29-05-2013 |
| | | | JP 5882693 B2 | | 09-03-2016 |
| | | | JP 2013108927 A | | 06-06-2013 |
| | | | US 2013135440 A1 | | 30-05-2013 |
| EP 2527787 | A2 | 28-11-2012 | CN 102840852 A | | 26-12-2012 |
| | | | EP 2527787 A2 | | 28-11-2012 |
| | | | US 2012300070 A1 | | 29-11-2012 |
| US 9046759 | B1 | 02-06-2015 | AU 2014274497 A1 | | 21-01-2016 |
| | | | US 9046759 B1 | | 02-06-2015 |
| | | | US 9188838 B1 | | 17-11-2015 |
| | | | WO 2015192163 A1 | | 23-12-2015 |
| US 2014267590 | A1 | 18-09-2014 | EP 2974278 A1 | | 20-01-2016 |
| | | | US 9179064 B1 | | 03-11-2015 |
| | | | US 2014267590 A1 | | 18-09-2014 |
| | | | US 2014320651 A1 | | 30-10-2014 |
| | | | US 2015365631 A1 | | 17-12-2015 |
| | | | US 2016037080 A1 | | 04-02-2016 |
| | | | US 2016044239 A1 | | 11-02-2016 |
| | | | WO 2014145319 A1 | | 18-09-2014 |
| | | | WO 2014145328 A1 | | 18-09-2014 |

EPO FORM P0460

Pour tout renseignement concernant cette annexe : voir Journal Officiel de l'Office européen des brevets, No.12/82

**EP 3 112 803 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2644240 A

15